(19) Europäisches Patentamt
European Patent Office
Office européen des brevets

(11) **EP 4 703 759 A1**

(12) **EUROPEAN PATENT APPLICATION**
published in accordance with Art. 153(4) EPC

(43) Date of publication:
**04.03.2026 Bulletin 2026/10**

(21) Application number: **23934530.9**

(22) Date of filing: **27.04.2023**

(51) International Patent Classification (IPC):
**G01S 7/292** *(2006.01)*

(52) Cooperative Patent Classification (CPC):
**G01S 7/292**

(86) International application number:
**PCT/CN2023/091154**

(87) International publication number:
**WO 2024/221333 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518110 (CN)**

(72) Inventors:
• **JING, Guobin**
  **Shenzhen, Guangdong 518129 (CN)**
• **CHENG, Zengfei**
  **Shenzhen, Guangdong 518129 (CN)**
• **LIAO, Xiaotong**
  **Shenzhen, Guangdong 518129 (CN)**
• **LI, Ting**
  **Shenzhen, Guangdong 518129 (CN)**

(74) Representative: **Maiwald GmbH
Elisenhof
Elisenstraße 3
80335 München (DE)**

(54) **DATA PROCESSING METHOD AND DEVICE**

(57) A data processing method and apparatus are provided, and may be applied to fields such as detection and intelligent driving. A millimeter-wave radar obtains first radar data of a current frame (301), sets the first radar data to zero based on an interference filtering threshold corresponding to the current frame, to obtain second radar data (302), performs energy inversion based on the second radar data to obtain a typical amplitude value of the current frame (303), determines a typical amplitude value of a next frame based on the typical amplitude value of the current frame and amplitude information of a historical frame (304), and determines an interference filtering threshold of the next frame based on the typical amplitude value of the next frame and a preset detection threshold (305). In the method, system time consumption can be reduced, and threshold accuracy can be improved.

```
A millimeter-wave radar obtains first radar data of a current frame          301

The millimeter-wave radar sets the first radar data to zero based on an
interference filtering threshold of the current frame, to obtain second radar data   302

The millimeter-wave radar performs energy inversion based on the second radar
data, to obtain a typical amplitude value of the current frame                303

The millimeter-wave radar determines a typical amplitude value of a next frame
based on the typical amplitude value of the current frame and amplitude
information of a historical frame                                             304

The millimeter-wave radar determines an interference filtering threshold of the
next frame based on the typical amplitude value of the next frame and a preset
detection threshold                                                          305
```

FIG. 3

**Description**

**TECHNICAL FIELD**

This application relates to the field of millimeter-wave radar technologies, and in particular, to a data processing method and apparatus.

**BACKGROUND**

With development and progress of sensor technologies, intelligent detection sensors of vehicles have become a research hotspot in the field of vehicle-assisted driving. An intelligent vehicle (intelligent vehicle for short) brings more convenient and safe driving experience. For example, a radar sensor may be installed on the intelligent vehicle to obtain ambient environment information of the vehicle day and night, especially long-distance environment information, to implement assisted driving. A vehicle-mounted millimeter-wave radar has become an important sensor for assisted driving. With large-scale commercial use and popularization of the millimeter-wave radar, an increased penetration rate and a limited frequency range of the vehicle-mounted radar cause mutual interference. To be specific, a signal of a peer radar is mixed into a receiver of an ego radar, causing interference to the ego radar, and resulting in missed alarm for a target, shortening of a detection distance, false alarm, and the like.

To reduce interference, currently, after the millimeter-wave radar completes wave transmission, received echo signals are segmented and grouped to estimate an interference detection threshold, and then the interference detection threshold is used to traverse all analog-to-digital converter (analog-to-digital converter, ADC) data to suppress interference. However, in this solution, the interference detection threshold needs to be estimated only after the echo signal is received. This increases system time consumption. In addition, when noise floor of the target is estimated in distributed interference, the interference is likely to be coupled, resulting in an excessively high estimated interference threshold, and causing missed alarm.

**SUMMARY**

This application provides a data processing method and apparatus, to reduce system time consumption and improve threshold accuracy.

A first aspect of this application provides a data processing method. The method includes: obtaining first radar data of a current frame; setting the first radar data to zero based on an interference filtering threshold of the current frame, to obtain second radar data; performing energy inversion based on the second radar data, to obtain a typical amplitude value of the current frame; determining a typical amplitude value of a next frame based on the typical amplitude value of the current frame and amplitude information of a historical frame; and determining an interference filtering threshold of the next frame based on the typical amplitude value of the next frame and a preset detection threshold.

In the foregoing aspect, when the first radar data of the current frame is obtained, the first radar data may be set to zero based on the interference filtering threshold corresponding to the current frame, and data obtained through zero setting is the second radar data. In this case, energy inversion may be performed on the second radar data, to deduce the typical amplitude value of the current frame, then, the typical amplitude value of the next frame is determined based on the amplitude information of the historical frame and a historical frame amplitude change, and the typical amplitude value of the next frame is processed based on the preset detection threshold, so that the interference filtering threshold of the next frame can be obtained. After each frame of radar data is received, the interference filtering threshold of the frame has been determined in a previous frame. Therefore, the received radar data may be directly filtered and subsequent processing may be performed, to reduce system time consumption; and the interference filtering threshold is determined based on the amplitude information of the historical frame, so that threshold accuracy can be improved.

In a possible implementation, the foregoing step of performing energy inversion based on the second radar data, to deduce the typical amplitude value of the current frame includes: performing energy accumulation on the second radar data, to obtain a target peak point amplitude and an energy inversion amplitude corresponding to the target peak point amplitude; and determining the typical amplitude value of the current frame based on the target peak point amplitude and the energy inversion amplitude.

In the foregoing possible implementation, after the peak point amplitude in the second radar data is determined, a data dimension of the peak point may be determined. Energy change amplitudes in different data dimensions of a signal are different. Therefore, after the dimension of the peak point is determined, an energy inversion amplitude corresponding to the peak point may be mapped. In this case, the typical amplitude value of the current frame may be obtained by subtracting the energy inversion amplitude from the target peak point amplitude, and accuracy of the typical value is improved based on the typical amplitude value of accumulated energy inversion.

In a possible implementation, the foregoing step of performing energy accumulation on the second radar data includes: accumulating radar data of the current frame in multi-antenna channels, where the accumulated radar data includes the second radar data.

In the foregoing possible implementation, the millimeter-wave radar may receive echo signals in the multi-antenna channels. When energy inversion is performed on the second radar data, because the second radar data is data collected on a single channel, there is no obvious impact on energy, in this embodiment of this application, an energy accumulation manner may be accumulating radar data that is of the current frame and that is collected in the multi-antenna channels, to improve accuracy of the typical value.

In a possible implementation, after setting the first radar data to zero based on the interference filtering threshold of the current frame, to obtain the second radar data, the method further includes: converting the second radar data into a two-dimensional matrix, where the two-dimensional matrix includes a sample dimension, a chirp dimension, and a Doppler division multiple access dimension.

In the foregoing possible implementation, after the second radar data is obtained, the second radar data may be further converted into the two-dimensional matrix, that is, a zero point in the second radar data is set to 1, and a non-zero point in the second radar data is set to 0, to reduce a data amount and facilitates counting of a quantity of zero points. The two-dimensional matrix may also be referred to as a 0-1 matrix. The two-dimensional matrix includes a sample dimension, a chirp dimension, and a Doppler division multiple access dimension. Each column of the two-dimensional matrix is each sample dimension, each row of the two-dimensional matrix is each chirp dimension, and each chirp dimension may be divided into a plurality of Doppler division multiple access dimensions. The second radar data is converted into the 0-1 matrix, to reduce a calculation amount.

In a possible implementation, after setting the first radar data to zero based on the interference filtering threshold of the current frame, to obtain the second radar data, the method further includes: counting a total quantity of zero points in the two-dimensional matrix; and determining a zero point distribution characteristic in the Doppler division multiple access dimension in the two-dimensional matrix; and after determining the interference filtering threshold of the next frame based on the typical amplitude value of the next frame and the preset detection threshold, the method further includes: determining an interference threshold difference based on the interference filtering threshold of the current frame and the interference filtering threshold of the next frame; and performing a weighted average on the total quantity of zero points, the interference threshold difference, and the zero point distribution characteristic, to obtain interference suppression reliability.

In the foregoing possible implementation, after obtaining the two-dimensional matrix, the millimeter-wave radar may further count a total quantity of zero points obtained through zero setting in the two-dimensional matrix, and determine the zero point distribution characteristic based on a distribution status of zero points in the Doppler division multiple access dimension. After the interference filtering threshold of the next frame is determined, the interference threshold difference between the interference filtering threshold of the current frame and the interference filtering threshold of the next frame may be determined, and then the weighted average is performed on the total quantity of zero points, the zero point distribution characteristic, and the interference threshold difference, to determine interference suppression reliability. The interference suppression reliability indicates current interference suppression effect. Lower interference suppression reliability indicates poorer interference suppression effect. Correspondingly, higher interference suppression reliability indicates better interference suppression effect. The interference suppression reliability may be used to evaluate accuracy of the interference filtering threshold, to assist in adjusting the interference filtering threshold and improve the accuracy of the interference filtering threshold.

In a possible implementation, the foregoing step of determining the zero point distribution characteristic in the Doppler division multiple access dimension in the two-dimensional matrix includes: determining the zero point distribution characteristic based on a proportional relationship between data in a plurality of Doppler division multiple access dimensions in the two-dimensional matrix.

In the foregoing possible implementation, a manner in which the millimeter-wave radar determines the zero point distribution characteristic may be determined based on a proportional relationship between data in the plurality of Doppler division multiple access dimensions in the chirp dimension. Specifically, each Doppler division multiple access dimension obtained through division based on the chirp dimension has a quantity of zero points. A zero point distribution characteristic may be determined based on zero point comparison in the Doppler division multiple access dimension, and interference suppression effect is further evaluated based on the zero point distribution characteristic in the Doppler division multiple access dimension, accuracy of interference suppression reliability is improved.

In a possible implementation, after converting the second radar data into the two-dimensional matrix, the method further includes: counting a total quantity of zero points in the two-dimensional matrix; and determining a noise floor difference in the second radar data; and after determining the interference filtering threshold of the next frame based on the typical amplitude value of the next frame and the preset detection threshold, the method further includes: determining an interference threshold difference based on the interference filtering threshold of the current frame and the interference filtering threshold of the next frame; and performing a weighted average on the total quantity of zero points, the interference threshold difference, and the noise floor difference, to obtain interference suppression reliability.

In the foregoing possible implementation, after obtaining the two-dimensional matrix, the millimeter-wave radar may further count the total quantity of zero points in the two-dimensional matrix and the noise floor difference in the second radar data. After the interference filtering threshold of the next frame is determined, the interference threshold difference between the interference filtering threshold of the current frame and the interference filtering threshold of the next frame may be determined, and then the weighted average is performed on the total quantity of zero points, the noise floor difference, and the interference threshold difference, to determine interference suppression reliability. The interference suppression reliability indicates current interference suppression effect. Lower interference suppression reliability indicates poorer interference suppression effect. Correspondingly, higher interference suppression reliability indicates better interference suppression effect. The interference suppression reliability may be used to evaluate accuracy of the interference filtering threshold, to assist in adjusting the interference filtering threshold and improve the accuracy of the interference filtering threshold.

In a possible implementation, the foregoing step of determining the noise floor difference in the second radar data includes: determining measured noise floor of the second radar data; and determining the noise floor difference based on the measured noise floor and the reference noise floor.

In the foregoing possible implementation, a manner in which the millimeter-wave radar determines the noise floor difference may be: first measuring noise floor in the second radar data as the measured noise floor, and then obtaining the reference noise floor of the millimeter-wave radar, where the reference noise floor may be predetermined, the reference noise floor is noise floor information that is measured in an anechoic chamber and that excludes impact of another factor. In this case, the noise floor difference may be determined based on a relationship between the measured noise floor and the reference noise floor, thereby improving feasibility of the solution.

In a possible implementation, the foregoing step of counting the total quantity of zero points in the two-dimensional matrix includes: determining a quantity of zero points in the sample dimension, a quantity of zero points in the chirp dimension, and a quantity of zero points in the Doppler division multiple access dimension in the two-dimensional matrix; and performing a weighted average on the quantity of zero points in the sample dimension, the quantity of zero points in the chirp dimension, and the quantity of zero points in the Doppler division multiple access dimension, to obtain the total quantity of zero points.

In the foregoing possible implementation, based on the sample dimension, the chirp dimension, and the Doppler division multiple access dimension in the two-dimensional matrix, a manner of determining the total quantity of zero points in this embodiment of this application may be first determining a quantity of zero points in each of the sample dimension, the chirp dimension, and the Doppler division multiple access dimension, and then, performing a weighted average on the zero points in each dimension based on a weight corresponding to the sample dimension, a weight corresponding to the chirp dimension, and a weight corresponding to the Doppler division multiple access dimension, to determine the total quantity of zero points. Accuracy of the total quantity of zero points can be improved by performing weighted summation in multiple dimensions.

In a possible implementation, before performing energy inversion based on the second radar data, to deduce the typical amplitude value of the current frame, the method further includes: converting the second radar data into a frequency domain representation.

In the foregoing possible implementation, before performing energy inversion, the millimeter-wave radar further needs to convert the echo signal into the frequency domain representation through a fast Fourier transform, that is, convert the second radar data into the frequency domain representation, the second radar data may be processed through one or more fast Fourier transforms, to improve feasibility of the solution.

A second aspect of this application provides a data processing apparatus. The apparatus can implement the method according to any one of the first aspect and the possible implementations of the first aspect. The apparatus includes a corresponding unit or module configured to perform the method. The unit or module included in the apparatus can be implemented by software and/or hardware. For example, the apparatus may be a network device, or may be a chip, a chip system, a processor, or the like that supports the network device in implementing the foregoing method, or may be a logic module or software that can implement all or some functions of the network device.

A third aspect of this application provides a computer device, including: a processor. The processor is coupled to a memory, the memory is configured to store instructions, and when the instructions are executed by the processor, the computer device is enabled to implement the method according to any one of the first aspect or the possible implementations of the first aspect. The computer device may be, for example, a network device, or may be a chip or a chip system that supports the network device in implementing the foregoing method.

A fourth aspect of this application provides a computer-readable storage medium. The computer-readable storage medium stores instructions. When the instructions are executed by a processor, the method according to any one of the first aspect or the possible implementations of the first aspect is implemented.

A fifth aspect of this application provides a computer program product. The computer program product includes computer program code. When the computer program code is executed on a computer, the method according to any one of the first aspect or the possible implementations of the first aspect is implemented.

A sixth aspect of this application provides a terminal device. The terminal device may be a vehicle or an electronic component, and the terminal device includes the apparatus according to the second aspect.

BRIEF DESCRIPTION OF DRAWINGS

FIG. 1 is a diagram of application of a millimeter-wave radar according to an embodiment of this application;
FIG. 2 is a diagram of a structure of a millimeter-wave radar according to an embodiment of this application;
FIG. 3 is a schematic flowchart of a data processing method according to an embodiment of this application;
FIG. 4 is a schematic flowchart of threshold inversion according to an embodiment of this application;
FIG. 5 is a schematic flowchart of determining interference suppression reliability according to an embodiment of this application;
FIG. 6 is another schematic flowchart of determining interference suppression reliability according to an embodiment of this application;
FIG. 7 is a diagram of a functional structure implemented by a processor according to an embodiment of this application;
FIG. 8 is a diagram of a processing procedure of an interference zeroing and counting module according to an embodiment of this application;
FIG. 9 is a diagram of a processing procedure of an interference threshold calculation and evaluation module according to an embodiment of this application;
FIG. 10 is a diagram of a structure of a data processing apparatus according to an embodiment of this application; and
FIG. 11 is a diagram of a structure of a computer device according to an embodiment of this application.

DESCRIPTION OF EMBODIMENTS

This application provides a data processing method and apparatus, to reduce system time consumption and improve threshold accuracy.

The following describes embodiments of this application with reference to accompanying drawings. It is clear that the described embodiments are merely some rather than all of embodiments of this application. A person of ordinary skill in the art may learn that, with development of technologies and emergence of a new scenario, technical solutions provided in embodiments of this application are also applicable to a similar technical problem.

In the specification, claims, and the accompanying drawings of this application, the terms "first", "second", and the like are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The following first describes related terms and concepts that may be used in embodiments of this application.

Millimeter-wave radar (Millimeter-wave radar): The millimeter-wave radar is also referred to as a millimeter-wave radar apparatus, and may also be referred to as a detector or a detection apparatus. A working principle of the millimeter-wave radar is to detect a corresponding target by transmitting a detection signal and receiving an echo signal reflected by the target. The target may be an organism like a person or an animal, or may be an object like a vehicle or an obstacle. The detection signal of the millimeter-wave radar operates in a millimeter-wave (millimeter-wave) band.

In a related technology, the millimeter-wave radar is installed on a vehicle to perform target detection, and accuracy of target detection is ensured in the following manner: performing special coding and modulation on a detection signal transmitted by the millimeter-wave radar; setting and limiting, based on a characteristic of an echo signal of the millimeter-wave radar, a constraint function of the echo signal; or determining a same target through a millimeter-wave radar network between a plurality of vehicles.

Energy inversion: After a plurality of fast Fourier transform (fast Fourier transform, FFT) operations are performed on original echo data of a radar, accumulated target energy may enhance a mapping relationship between target energy, accumulated energy, and typical energy. Inversion is reverse deduction. It is assumed that target energy, and an accumulation manner and parameter information in the process are known to reversely deduce typical energy of the original echo.

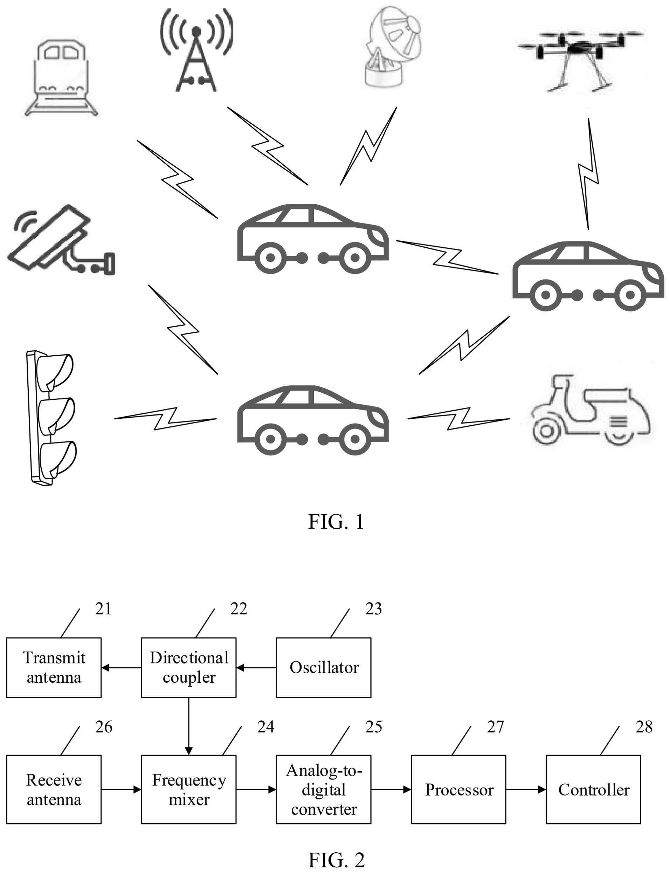

FIG. 1 is a diagram of application of a millimeter-wave radar according to an embodiment of this application. As shown in FIG. 1, the millimeter-wave radar may be installed on various radar carriers, the radar carriers includes a motor vehicle, a drone, a railcar, a bicycle, a traffic light, a speed measurement apparatus, a network device (for example, a base station and a terminal device in various systems), an intelligent terminal (such as an intelligent transportation device, a smart home device, and a robot), and the like.

FIG. 2 is a diagram of a structure of a millimeter-wave radar according to an embodiment of this application. As shown in FIG. 2, the millimeter-wave radar may include apparatuses such as a transmit antenna 21, a directional coupler 22, an oscillator 23, a frequency mixer 24, an analog-to-digital converter (analog-to-digital converter, ADC) 25, a receive antenna 26, a processor 27, and a controller 28. The controller 28 may be disposed in the millimeter-wave radar; or the controller 28 may not be disposed in the millimeter-wave radar, for example, may be disposed in a radar carrier like a motor vehicle on which the millimeter-wave radar is installed as shown in FIG. 1. This is not limited in this application.

The oscillator 23 generates a detection signal, for example, a linear frequency modulated continuous wave. A part of the detection signal is output, through the directional coupler 22, to the frequency mixer 24 as a local oscillator signal, and another part of the detection signal is transmitted through the transmit antenna 21. In addition, the millimeter-wave radar receives, through the receive antenna 26, an echo signal reflected back by a target in front of the millimeter-wave radar, and frequency mixing is performed on the echo signal and the local oscillator signal in the frequency mixer 24, to obtain an intermediate frequency signal. The intermediate frequency signal includes information about the target, and the information about the target may be a relative parameter between the target and the millimeter-wave radar, for example, at least one of a detection speed, a detection distance, and a detection angle of the target. The intermediate frequency signal (for example, the intermediate frequency signal may be an intermediate frequency signal that has been passed through a low-pass filter and amplified, where a signal whose frequency is greater than a maximum intermediate frequency frequency is filtered out by the low-pass filter, and the low-pass filter is not shown in the figure) is transmitted to the ADC 25 for sampling, sampled ADC data is input to the processor 27, the processor 27 processes the ADC data (for example, may perform processing such as fast Fourier transform or spectrum analysis on the ADC data) to obtain the information about the target, and finally, the information is output to the controller 28 for control of the radar carrier like the motor vehicle.

A vehicle-mounted millimeter-wave radar has become an important sensor for assisted driving. With large-scale commercial use and popularization of the millimeter-wave radar, an increased penetration rate and a limited frequency range of the vehicle-mounted radar cause mutual interference. To be specific, a signal of a peer radar is mixed into a receiver of an ego radar, causing interference to the ego radar, and resulting in missed alarm for a target, shortening of a detection distance, false alarm, and the like.

To reduce interference, currently, after the millimeter-wave radar completes wave transmission, received echo signals are segmented and grouped to estimate an interference detection threshold, and then the interference detection threshold is used to traverse all analog-to-digital converter (analog-to-digital converter, ADC) data to suppress interference. However, in this solution, the interference detection threshold needs to be estimated only after the echo signal is received. This increases system time consumption. In addition, when noise floor of the target is estimated in distributed interference, the interference is likely to be coupled, resulting in an excessively high estimated interference threshold, and causing missed alarm.

To resolve the foregoing problems, an embodiment of this application provides a data processing method. The method is described as follows.

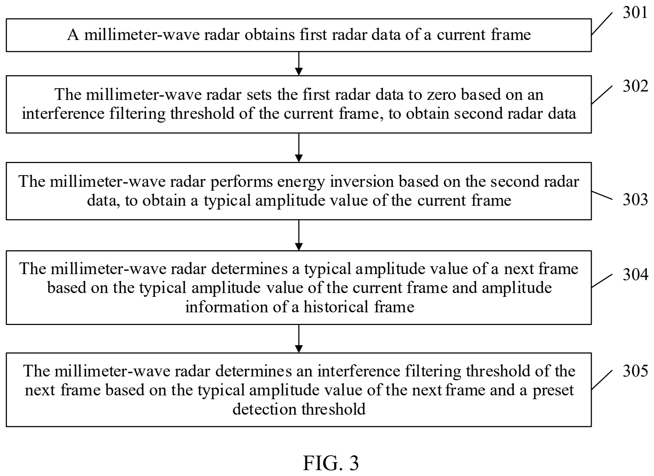

FIG. 3 is a schematic flowchart of a data processing method according to an embodiment of this application. The method includes the following steps.

Step 301: A millimeter-wave radar obtains first radar data of a current frame.

In this embodiment, after transmitting a detection signal, the millimeter-wave radar may receive an echo signal reflected back by a detection target through the detection signal. The millimeter-wave radar may process each frame of echo signal, that is, for time of current frame, the millimeter-wave radar may select the echo signal of the current frame as the first radar data. Because there may be a detection signal transmitted by another radar, the millimeter-wave radar may also receive, in the current frame, the detection signal transmitted by the another radar. In this case, in addition to the echo signal, the first radar data may further include another detection signal used as interference.

Step 302: The millimeter-wave radar sets the first radar data to zero based on an interference filtering threshold of the current frame, to obtain second radar data.

In this embodiment, because the echo signal received by the millimeter-wave radar in the current frame is not necessarily reflected back by the previous detection signal, the echo signal received in the current frame further needs to be filtered. In this embodiment of this application, the first radar data obtained in step 301 may be set to zero based on the interference filtering threshold corresponding to the current frame, that is, a signal that is in the first radar data and that exceeds the interference filtering threshold is set to 0, and first radar data obtained through zero setting is the second radar data. The interference filtering threshold of the current frame may be provided in another estimation manner, or may be a preset initial value, or may be provided in a manner in this embodiment of this application. This is not limited herein.

For example, in a process of processing first frame data after power-on, an initialized interference filtering threshold TdicThr0 may be invoked to perform interference detection and zeroing operations on first frame received data AdcSampleData. For non-first frame data after power-on, the interference filtering threshold finvTdicThr transferred from a previous frame may be used as the interference filtering threshold TdicThr of the current frame, and an interference detection operation is performed during wave transmission and echo signal reception:

$$if \quad abs(AdcSampleData\,[i][j][k][q]\,) \,>\, TdicThr$$
$$AdcSampleData\,[i][j][k][q]\,=\,0,$$

$i \in [1, I]; j \in [1, J]; k \in [1, K]$; where $q \in [1, Q]$, I is a quantity of distance sampling points, J is a quantity of chirp (chirp), K is a time division multiplexing (testing data management/technical data management, TDM) number, and Q is a quantity of receive antenna channels.

In a possible design, after the second radar data is obtained, the second radar data may be further converted into a two-dimensional matrix, that is, a zero point in the second radar data is set to 1, and a non-zero point in the second radar data is set to 0, to reduce a data amount and facilitates counting of a quantity of zero points. The two-dimensional matrix may also be referred to as a 0-1 matrix. The two-dimensional matrix includes a sample (sample) dimension, a chirp dimension, and a Doppler division multiple access (Doppler division multiple access, DDM) dimension. Each column of the two-dimensional matrix is each sample dimension, each row of the two-dimensional matrix is each chirp dimension, and each chirp dimension may be divided into a plurality of DDM dimensions.

Step 303: The millimeter-wave radar performs energy inversion based on the second radar data, to obtain a typical amplitude value of the current frame.

In this embodiment, echo data has an amplitude change under impact of energy. Based on that affected energy is known target energy, energy inversion can be completed by determining a current signal amplitude and eliminating impact of the known target energy. In other words, the millimeter-wave radar may determine the signal amplitude in the second radar data, and may obtain the typical amplitude value of the current frame, that is, the amplitude value of the current frame in most cases, after impact of the known target energy is eliminated.

In a possible design, a manner in which the millimeter-wave radar performs energy inversion may be first performing energy accumulation on the second radar data, to determine a target peak point amplitude of the second radar data and an energy inversion amplitude corresponding to the target peak point amplitude. In this case, the typical amplitude value of the current frame may be determined based on a relationship between the target peak point amplitude and the energy inversion amplitude. Specifically, after the peak point amplitude in the second radar data is determined, a data dimension of the peak point may be determined. Energy change amplitudes in different data dimensions of a signal are different. Therefore, after the dimension of the peak point is determined, an energy inversion amplitude corresponding to the peak point may be mapped. In this case, the typical amplitude value of the current frame may be obtained by subtracting the energy inversion amplitude from the target peak point amplitude.

In a possible design, the millimeter-wave radar may receive echo signals in multi-antenna channels. When energy inversion is performed on the second radar data, because the second radar data is data collected on a single channel, there is no obvious impact on energy, in this embodiment of this application, an energy accumulation manner may be accumulating radar data that is of the current frame and that is collected in the multi-antenna channels, and the accumulated radar data includes the second radar data.

For example, the millimeter-wave radar may perform energy inversion through radar data accumulated through a plurality of signals, and may determine a peak point amplitude NCI_Eng; and the millimeter-wave radar determines, based on a dimension of a peak point in which the peak point amplitude is located, that is, a sample dimension, a chirp dimension, and a DDM dimension in which the peak point amplitude is located, an energy inversion amplitude NCI_Coff corresponding to the NCI_Eng based on a correspondence between a dimension and an energy inversion amplitude. In this case, a typical amplitude value $ADC_{Amp}$ of the current frame is as follows:

$$ADC_{Amp} \,=\, NCI\_Eng \,-\, NCI\_Coff$$

In this case, the millimeter-wave radar may infer a typical amplitude value ADC_Pred of the next frame based on the typical amplitude value $ADC_{Amp}$ of the current frame and amplitude information of a historical frame, and an interference filtering threshold of the next frame finvTdicThr = $ADC_{Pred}$ + TdicDetThr, TdicDetThr is a detection threshold.

In a possible design, before performing energy inversion, the millimeter-wave radar further needs to convert the echo signal into a frequency domain representation through FFT, that is, convert the second radar data into the frequency domain representation. The second radar data may be processed through one or more FFTs. This is not limited herein.

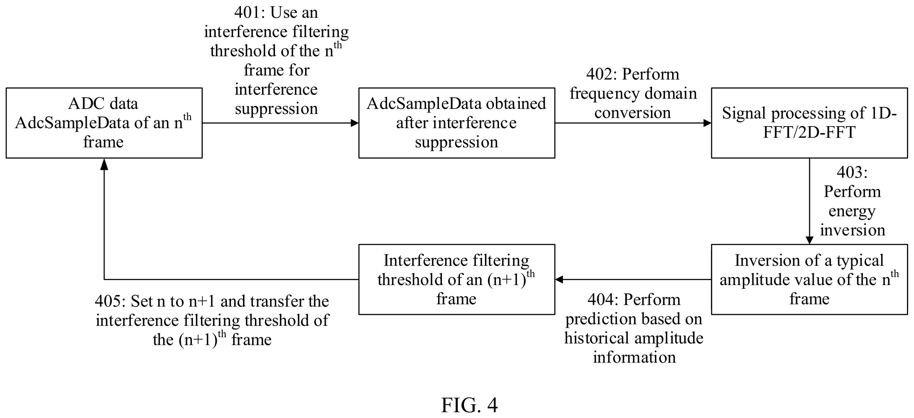

For example, for a schematic flowchart of threshold inversion in this embodiment of this application, refer to FIG. 4. Step 401: Use an interference filtering threshold of an $n^{th}$ frame for interference suppression of ADC data AdcSam-

EP 4 703 759 A1

pleData of the $n^{th}$ frame. Step 402: Perform signal processing of 1D-FFT/2D-FFT on the AdcSampleData obtained through interference suppression. Step 403: Perform inversion of a typical amplitude value $ADC_{Amp}$ of the $n^{th}$ frame from processed data. Step 404: Predict an interference filtering threshold finvTdicThr of an $(n+1)^{th}$ frame based on a typical amplitude value $ADC_{Amp}$ of the $n^{th}$ frame. Step 405: Set n in step 401 to n+1, and transfer the interference filtering threshold finvTdicThr of the $(n+1)^{th}$ frame to step 401.

Step 304: The millimeter-wave radar determines a typical amplitude value of a next frame based on the typical amplitude value of the current frame and amplitude information of a historical frame.

In this embodiment of this application, amplitude information of signal strength of echo data of each frame may be stored as the amplitude information of the historical frame, and the amplitude information of the historical frame may reflect an amplitude change rule of a signal. In this case, after the millimeter-wave radar obtains the typical amplitude value of the current frame, the millimeter-wave radar can determine the typical amplitude value of the next frame based on the amplitude change rule.

Step 305: The millimeter-wave radar determines an interference filtering threshold of the next frame based on the typical amplitude value of the next frame and a preset detection threshold.

In this embodiment, after determining the typical amplitude value of the next frame, the millimeter-wave radar may superimpose the typical amplitude value of the next frame based on the preset detection threshold, and an amplitude value obtained through superimposition may be used as an interference filtering threshold for filtering an echo signal of the next frame. For example, the preset detection threshold may be 10 dB, that is, a typical amplitude value increased by 10 dB is used as the interference filtering threshold of the next frame.

In a possible design, after obtaining the two-dimensional matrix, the millimeter-wave radar may further count a total quantity of zero points obtained through zero setting in the two-dimensional matrix, and determine the zero point distribution characteristic based on a distribution status of zero points in the Doppler division multiple access dimension. After the interference filtering threshold of the next frame is determined, the interference threshold difference between the interference filtering threshold of the current frame and the interference filtering threshold of the next frame may be determined, and then the weighted average is performed on the total quantity of zero points, the zero point distribution characteristic, and the interference threshold difference, to determine interference suppression reliability. The interference suppression reliability indicates current interference suppression effect. Lower interference suppression reliability indicates poorer interference suppression effect. Correspondingly, higher interference suppression reliability indicates better interference suppression effect.

In the foregoing possible design, based on the sample dimension, the chirp dimension, and the DDM dimension in the two-dimensional matrix, a manner of determining the total quantity of zero points in this embodiment of this application may be first determining a quantity of zero points in each of the sample dimension, the chirp dimension, and the DDM dimension, and then, performing a weighted average on the zero points in each dimension based on a weight corresponding to the sample dimension, a weight corresponding to the chirp dimension, and a weight corresponding to the DDM dimension, to determine the total quantity of zero points. For example, traversal detection is performed on the 0-1 matrix TdicZeroedMatrix, and a quantity of weighted points in each of the sample dimension, the chirp dimension, and the DDM dimension is counted, to obtain a total quantity tdicZeroedTotalNum of zero points.

In a possible design, a manner in which the millimeter-wave radar determines the zero point distribution characteristic may be determined based on a proportional relationship between data in a plurality of DDM dimensions in the chirp dimension. Specifically, each DDM dimension obtained through division based on the chirp dimension has a quantity of zero points, the zero point distribution characteristic may be determined based on zero point comparison in a DDM dimension. For example, data in a chirp dimension is divided into four DDMs such as a DDM 1, a DDM 2, a DDM 3, and a DDM 4, where the DDMs are a quantity of zero points in the DDM dimension, in this case, the four DDMs may be compared with each other to determine a zero point distribution characteristic. Simply speaking, if (DDM 1/DDM 2)>3, (DDM 1/DDM 3)>3, or (DDM 1/DDM 4)>3, it can be learned that, compared with the DDM 2, the DDM 1 dimension point is filtered out too much, and the DDM 1 has been excessively interfered with. This may indicate that current interference suppression reliability is not high. For example, if the DDM 1 is [1, 1, 1, 1] and the DDM 2 is [0, 1, 0, 0], DDM 1=4, and DDM 2=1. In this case, (DDM 1/DDM 2)>3, and current interference suppression reliability is not high.

For example, a manner of calculating the interference threshold difference finvAdcDiff is finvAdcDiff = finvTdicThr - TdicThr, where finvTdicThr is an interference filtering threshold obtained through inversion in the current frame, TdicThr is an interference filtering threshold used in the current frame, and interference suppression reliability (finvAdcCoff) can be determined based on a total quantity of zero points (tdicZeroedTotalNum) and a zero point distribution characteristic (tdicZeroeDdmThr):

finvAdcCoff = finvAdcDiffCoff · finvAdcDiff + tdicZeroedTotalNumCoff · tdicZeroedTotalNum + tdicZeroeDdmThrCoff · tdicZeroeDdmThr, where finvAdcDiffCoff indicates a weight coefficient of the interference threshold difference finvAdcDiff, tdicZeroedTotalNumCoff indicates a weight coefficient of the total quantity of zero points tdicZeroedTotalNum, and tdicZeroeDdmThrCoff indicates a weight coefficient of the zero point distribution characteristic tdicZeroeDdmThr.

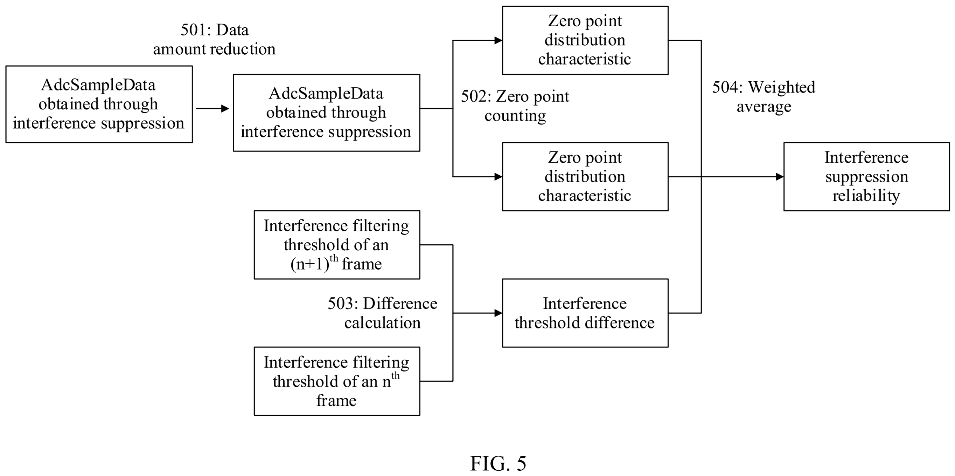

For example, for a schematic flowchart of determining the interference suppression reliability, refer to FIG. 5. Step 501: Reduce a data amount of AdcSampleData obtained through interference suppression to obtain a two-dimensional matrix. Step 502: Perform zero point counting on the two-dimensional matrix, to determine a total quantity of zero points obtained through zero setting and a zero point distribution characteristic. Step 503: Determine an interference threshold difference based on an interference filtering threshold of a current frame and an interference filtering threshold of a next frame. Step 504: Perform a weighted average on the total quantity of zero points, the zero point distribution characteristic, and the interference threshold difference, and calculate the interference suppression reliability.

In another possible design, after obtaining the two-dimensional matrix, the millimeter-wave radar may further count the total quantity of zero points in the two-dimensional matrix and the noise floor difference in the second radar data. After the interference filtering threshold of the next frame is determined, the interference threshold difference between the interference filtering threshold of the current frame and the interference filtering threshold of the next frame may be determined, and then the weighted average is performed on the total quantity of zero points, the noise floor difference, and the interference threshold difference, to determine interference suppression reliability. The interference suppression reliability indicates current interference suppression effect. Lower interference suppression reliability indicates poorer interference suppression effect. Correspondingly, higher interference suppression reliability indicates better interference suppression effect.

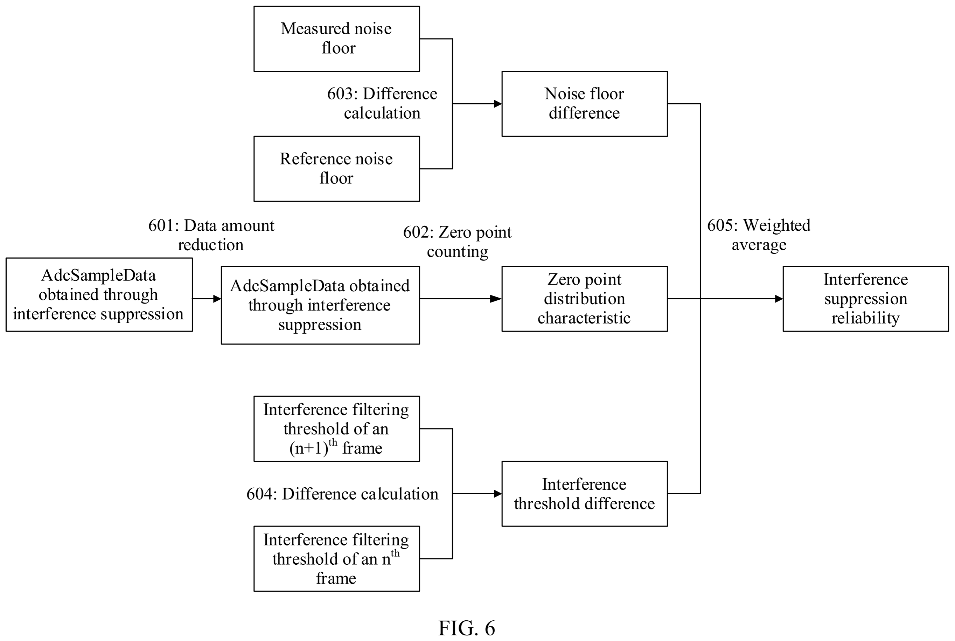

For example, for another schematic flowchart of determining the interference suppression reliability, refer to FIG. 6. Step 601: Reduce a data amount of AdcSampleData obtained through interference suppression to obtain a two-dimensional matrix. Step 602: Perform zero point counting on the two-dimensional matrix to determine a total quantity of zero points obtained through zero setting. Step 603: Determine a noise floor difference based on a measured noise floor of a current frame and a reference noise floor. Step 604: Determine an interference threshold difference based on an interference filtering threshold of the current frame and an interference filtering threshold of a next frame. Step 605: Perform a weighted average on the total quantity of zero points, the noise floor difference, and the interference threshold difference, and calculate the interference suppression reliability.

A manner in which the millimeter-wave radar determines the noise floor difference may be: first measuring noise floor in the second radar data as the measured noise floor, and then obtaining the reference noise floor of the millimeter-wave radar, where the reference noise floor may be predetermined, the reference noise floor is noise floor information that is measured in an anechoic chamber and that excludes impact of another factor. In this case, the noise floor difference may be determined based on a relationship between the measured noise floor and the reference noise floor.

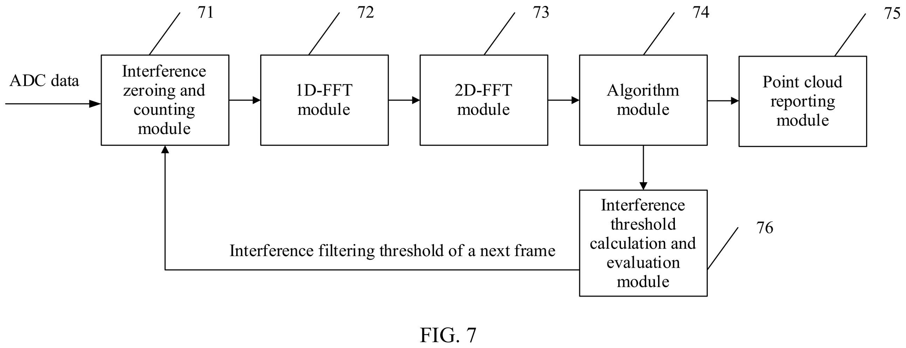

In a possible implementation, for a diagram of a functional structure implemented by the processor in FIG. 2, refer to FIG. 7. The processor includes an interference zeroing and counting module 71, a 1D-FFT module 72, a 2D-FFT module 73, an algorithm (algorithm, ALG) module 74, a point cloud reporting module 75 and an interference threshold calculation and evaluation module 76. The interference zeroing and counting module 71 is configured to: receive ADC data, perform interference zeroing on the ADC data, and then count a total quantity of zero points and a zero point distribution characteristic of the ADC data obtained through interference zeroing; ADC data obtained through interference zeroing may be processed by the 1D-FFT module 72 and the 2D-FFT module 73; and then the ALG module 74 performs signal preprocessing, target detection, or the like, to generate point cloud strength information; and then, the point cloud reporting module 75 reports the point cloud intensity information. The interference threshold calculation and evaluation module 76 may perform energy inversion based on data processed in the ALG module 74, predict a based amplitude of a next frame based on inverted typical ADC amplitude value, and then add a detection threshold to generate an interference filtering threshold of the next frame, and then, calculate interference suppression reliability of the interference filtering threshold of the current frame.

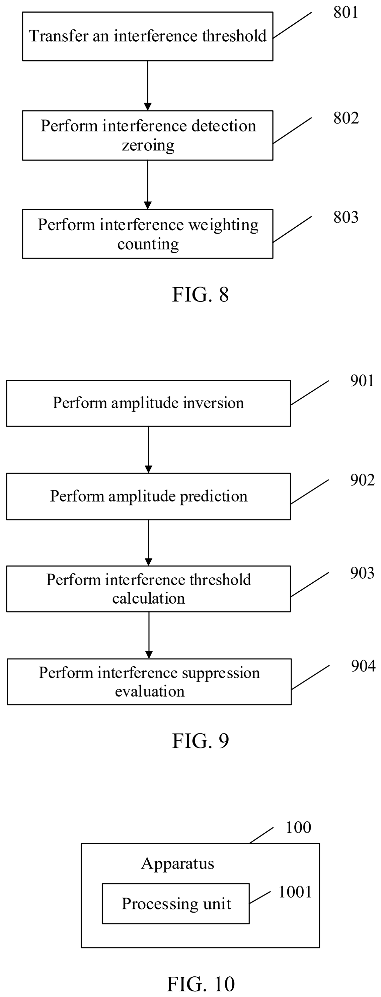

For example, for a processing procedure of the interference zeroing and counting module 71, refer to FIG. 8. Step 801: Transfer an interference threshold, to be specific, receive an interference filtering threshold transferred by the interference threshold calculation and evaluation module 76 in a previous frame. Step 802: Perform interference detection zeroing, to be specific, perform interference zeroing on the ADC data of the current frame based on the interference filtering threshold transferred in the previous frame. Step 803: Perform interference weighting counting, to be specific, a total quantity of weighted zero points in each dimension of the ADC data obtained through interference zeroing are counted.

For example, for a processing procedure of the interference threshold calculation and evaluation module 76, refer to FIG. 9. Step 901: Perform amplitude inversion, to be specific, perform energy inversion on NCI information of ADC data accumulated in the ALG module 74, to obtain a typical ADC amplitude value of the current frame. Step 902: Perform amplitude prediction, to be specific, predict the typical amplitude value of the next frame based on the typical ADC amplitude value of the current frame and amplitude information of a historical frame. Step 903: Perform interference threshold calculation, to be specific, generate the interference filtering threshold of the next frame based on the typical amplitude value of the next frame and a check threshold. Step 904: Perform interference suppression evaluation, to be specific, generate interference suppression reliability of the current frame based on a difference between interference filtering thresholds of the current frame and the next frame and a zeroing result of the current frame.

In this embodiment of this application, when obtaining the first radar data of the current frame, the millimeter-wave radar may set the first radar data to zero based on the interference filtering threshold corresponding to the current frame, and data obtained through zero setting is the second radar data. In this case, energy inversion may be performed on the second radar data, to deduce the typical amplitude value of the current frame, then, the typical amplitude value of the next frame is determined based on the amplitude information of the historical frame and a historical frame amplitude change, and the typical amplitude value of the next frame is processed based on the preset detection threshold, so that the interference filtering threshold of the next frame can be obtained. After each frame of radar data is received, the interference filtering threshold of the frame has been determined in a previous frame. Therefore, the received radar data may be directly filtered and subsequent processing may be performed, to reduce system time consumption; and the interference filtering threshold is determined based on the amplitude information of the historical frame, so that threshold accuracy can be improved.

The foregoing describes the data processing method, and the following describes an apparatus for performing the method.

FIG. 10 is a diagram of a structure of a data processing apparatus according to an embodiment of this application. The apparatus 100 includes:

a processing unit 1001, configured to: obtain first radar data of a current frame, set the first radar data to zero based on an interference filtering threshold of the current frame, to obtain second radar data, perform energy inversion based on the second radar data, to obtain a typical amplitude value of the current frame, determine a typical amplitude value of a next frame based on the typical amplitude value of the current frame and amplitude information of a historical frame, and determine an interference filtering threshold of the next frame based on the typical amplitude value of the next frame and a preset detection threshold.

The processing unit 1001 is configured to perform step 301 to step 304 in the method embodiment in FIG. 3.

Optionally, the processing unit 1001 is specifically configured to:

perform energy accumulation on the second radar data, to obtain a target peak point amplitude and an energy inversion amplitude corresponding to the target peak point amplitude; and

determine the typical amplitude value of the current frame based on the target peak point amplitude and the energy inversion amplitude.

Optionally, the processing unit 1001 is specifically configured to:

accumulate radar data of the current frame in multi-antenna channels, where the accumulated radar data includes the second radar data.

Optionally, the processing unit 1001 is further configured to:

convert the second radar data into a two-dimensional matrix, where the two-dimensional matrix includes a sample dimension, a chirp dimension, and a Doppler division multiple access dimension.

Optionally, the processing unit 1001 is further configured to:

count a total quantity of zero points in the two-dimensional matrix;

determine a zero point distribution characteristic in the Doppler division multiple access dimension in the two-dimensional matrix;

determine an interference threshold difference based on the interference filtering threshold of the current frame and the interference filtering threshold of the next frame; and

perform a weighted average on the total quantity of zero points, the interference threshold difference, and the zero point distribution characteristic, to obtain interference suppression reliability.

Optionally, the processing unit 1001 is specifically configured to:

determine the zero point distribution characteristic based on a proportional relationship between data in a plurality of Doppler division multiple access dimensions in the two-dimensional matrix.

Optionally, the processing unit 1001 is further configured to:

count a total quantity of zero points in the two-dimensional matrix;

determine a noise floor difference in the second radar data;

determine an interference threshold difference based on the interference filtering threshold of the current frame and the interference filtering threshold of the next frame; and

perform a weighted average on the total quantity of zero points, the interference threshold difference, and the noise floor difference, to obtain interference suppression reliability.

Optionally, the processing unit 1001 is specifically configured to:

determine measured noise floor of the second radar data; and
determine the noise floor difference based on the measured noise floor and reference noise floor.

Optionally, the processing unit 1001 is specifically configured to:

determine a quantity of zero points in the sample dimension, a quantity of zero points in the chirp dimension, and a quantity of zero points in the Doppler division multiple access dimension in the two-dimensional matrix; and
perform a weighted average on the quantity of zero points in the sample dimension, the quantity of zero points in the chirp dimension, and the quantity of zero points in the Doppler division multiple access dimension, to obtain the total quantity of zero points.

Optionally, the processing unit 1001 is further configured to:
convert the second radar data into a frequency domain representation.

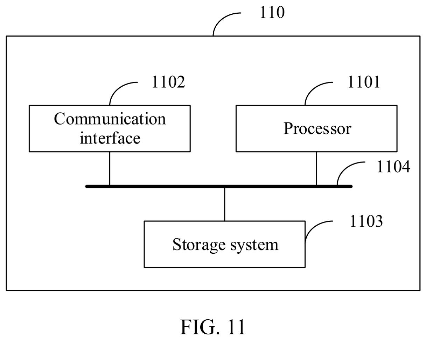

FIG. 11 is a diagram of a possible logical structure of a computer device 110 according to an embodiment of this application. The computer device 110 includes a processor 1101, a communication interface 1102, a storage system 1103, and a bus 1104. The processor 1101, the communication interface 1102, and the storage system 1103 are connected to each other through the bus 1104. In this embodiment of this application, the processor 1101 is configured to control and manage an action of the computer device 110. For example, the processor 1101 is configured to perform the steps performed by the millimeter-wave radar in the method embodiment in FIG. 3. The communication interface 1102 is configured to support the computer device 110 in performing communication. The storage system 1103 is configured to store program code and data of the computer device 110.

The processor 1101 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. The processor 1101 may alternatively be a combination, for example, a combination including one or more microprocessors or a combination of a digital signal processor and a microprocessor, for implementing a computing function. The bus 1104 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. For ease of representation, only one bold line is used to represent the bus in FIG. 11, but this does not mean that there is only one bus or only one type of bus.

The processing unit 1001 in the apparatus 100 is equivalent to the processor 1101 in the computer device 110.

The computer device 110 in this embodiment may correspond to the millimeter-wave radar in the method embodiment in FIG. 3. The communication interface 1102 in the computer device 110 may implement functions and/or steps implemented by the millimeter-wave radar in the method embodiment in FIG. 3. For brevity, details are not described herein again.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, the unit in any one of the foregoing apparatuses may be one or more integrated circuits configured to implement the foregoing methods, for example, one or more application-specific integrated circuits (application-specific integrated circuits, ASICs), or one or more microprocessors (digital signal processors, DSPs), or one or more field programmable gate arrays (field programmable gate arrays, FPGAs), or a combination of at least two of these integrated circuit forms. For another example, when the unit in the apparatus may be implemented in a manner in which the processing element schedules a program, the processing element may be a general-purpose processor, such as a CPU or another processor that can invoke a program. For another example, the units may be integrated and implemented in a form of a system-on-a-chip (system-on-a-chip, SoC).

In another embodiment of this application, a computer-readable storage medium is further provided. The computer-readable storage medium stores computer-executable instructions. When a processor of a device executes the computer-executable instructions, the device performs the method performed by the millimeter-wave radar in the foregoing method embodiments.

In another embodiment of this application, a computer program product is further provided. The computer program product includes computer-executable instructions, and the computer-executable instructions are stored in a computer-readable storage medium. When a processor of a device executes the computer-executable instructions, the device performs the methods performed by the millimeter-wave radar in the foregoing method embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

**Claims**

1. A data processing method, comprising:

   obtaining first radar data of a current frame;
   setting the first radar data to zero based on an interference filtering threshold of the current frame, to obtain second radar data;
   performing energy inversion based on the second radar data, to obtain a typical amplitude value of the current frame;
   determining a typical amplitude value of a next frame based on the typical amplitude value of the current frame and amplitude information of a historical frame; and
   determining an interference filtering threshold of the next frame based on the typical amplitude value of the next frame and a preset detection threshold.

2. The method according to claim 1, wherein performing energy inversion based on the second radar data, to deduce the typical amplitude value of the current frame comprises:

   performing energy accumulation on the second radar data, to obtain a target peak point amplitude and an energy inversion amplitude corresponding to the target peak point amplitude; and
   determining the typical amplitude value of the current frame based on the target peak point amplitude and the energy inversion amplitude.

3. The method according to claim 2, wherein performing energy accumulation on the second radar data comprises: accumulating radar data of the current frame in multi-antenna channels, wherein the accumulated radar data comprises the second radar data.

4. The method according to any one of claims 1 to 3, wherein after setting the first radar data to zero based on the interference filtering threshold of the current frame, to obtain the second radar data, the method further comprises: converting the second radar data into a two-dimensional matrix, wherein the two-dimensional matrix comprises a sample dimension, a chirp dimension, and a Doppler division multiple access dimension.

5. The method according to claim 4, wherein after setting the first radar data to zero based on the interference filtering threshold of the current frame, to obtain the second radar data, the method further comprises:

counting a total quantity of zero points in the two-dimensional matrix; and
determining a zero point distribution characteristic in the Doppler division multiple access dimension in the two-dimensional matrix; and
after determining the interference filtering threshold of the next frame based on the typical amplitude value of the next frame and the preset detection threshold, the method further comprises:

determining an interference threshold difference based on the interference filtering threshold of the current frame and the interference filtering threshold of the next frame; and
performing a weighted average on the total quantity of zero points, the interference threshold difference, and the zero point distribution characteristic, to obtain interference suppression reliability.

6. The method according to claim 5, wherein determining the zero point distribution characteristic in the Doppler division multiple access dimension in the two-dimensional matrix comprises: determining the zero point distribution characteristic based on a proportional relationship between data in a plurality of Doppler division multiple access dimensions in the two-dimensional matrix.

7. The method according to claim 4, wherein after converting the second radar data into the two-dimensional matrix, the method further comprises:

counting a total quantity of zero points in the two-dimensional matrix; and
determining a noise floor difference in the second radar data; and
after determining the interference filtering threshold of the next frame based on the typical amplitude value of the next frame and the preset detection threshold, the method further comprises:

determining an interference threshold difference based on the interference filtering threshold of the current frame and the interference filtering threshold of the next frame; and
performing a weighted average on the total quantity of zero points, the interference threshold difference, and the noise floor difference, to obtain interference suppression reliability.

8. The method according to claim 7, wherein determining the noise floor difference in the second radar data comprises:

determining measured noise floor of the second radar data; and
determining the noise floor difference based on the measured noise floor and reference noise floor.

9. The method according to any one of claims 5 to 8, wherein counting the total quantity of zero points in the two-dimensional matrix comprises:

determining a quantity of zero points in the sample dimension, a quantity of zero points in the chirp dimension, and a quantity of zero points in the Doppler division multiple access dimension in the two-dimensional matrix; and
performing a weighted average on the quantity of zero points in the sample dimension, the quantity of zero points in the chirp dimension, and the quantity of zero points in the Doppler division multiple access dimension, to obtain the total quantity of zero points.

10. The method according to any one of claims 1 to 9, wherein before performing energy inversion based on the second radar data, to deduce the typical amplitude value of the current frame, the method further comprises: converting the second radar data into a frequency domain representation.

11. A data processing apparatus, comprising:

a processing unit, configured to: obtain first radar data of a current frame, set the first radar data to zero based on an interference filtering threshold of the current frame, to obtain second radar data, perform energy inversion based on the second radar data, to obtain a typical amplitude value of the current frame, determine a typical amplitude value of a next frame based on the typical amplitude value of the current frame and amplitude information of a historical frame, and determine an interference filtering threshold of the next frame based on the typical amplitude value of the next frame and a preset detection threshold.

12. The apparatus according to claim 11, wherein the processing unit is specifically configured to:

perform energy accumulation on the second radar data, to obtain a target peak point amplitude and an energy inversion amplitude corresponding to the target peak point amplitude; and
determine the typical amplitude value of the current frame based on the target peak point amplitude and the energy inversion amplitude.

13. The apparatus according to claim 12, wherein the processing unit is specifically configured to:
accumulate radar data of the current frame in multi-antenna channels, wherein the accumulated radar data comprises the second radar data.

14. The apparatus according to any one of claims 11 to 13, wherein the processing unit is further configured to:
convert the second radar data into a two-dimensional matrix, wherein the two-dimensional matrix comprises a sample dimension, a chirp dimension, and a Doppler division multiple access dimension.

15. The apparatus according to claim 14, wherein the processing unit is further configured to:

count a total quantity of zero points in the two-dimensional matrix;
determine a zero point distribution characteristic in the Doppler division multiple access dimension in the two-dimensional matrix;
determine an interference threshold difference based on the interference filtering threshold of the current frame and the interference filtering threshold of the next frame; and
perform a weighted average on the total quantity of zero points, the interference threshold difference, and the zero point distribution characteristic, to obtain interference suppression reliability.

16. The apparatus according to claim 15, wherein the processing unit is specifically configured to:
determine the zero point distribution characteristic based on a proportional relationship between data in a plurality of Doppler division multiple access dimensions in the two-dimensional matrix.

17. The apparatus according to claim 14, wherein the processing unit is further configured to:

count a total quantity of zero points in the two-dimensional matrix;
determine a noise floor difference in the second radar data;
determine an interference threshold difference based on the interference filtering threshold of the current frame and the interference filtering threshold of the next frame; and
perform a weighted average on the total quantity of zero points, the interference threshold difference, and the noise floor difference, to obtain interference suppression reliability.

18. The apparatus according to claim 17, wherein the processing unit is specifically configured to:

determine measured noise floor of the second radar data; and
determine the noise floor difference based on the measured noise floor and reference noise floor.

19. The apparatus according to any one of claims 15 to 18, wherein the processing unit is specifically configured to:

determine a quantity of zero points in the sample dimension, a quantity of zero points in the chirp dimension, and a quantity of zero points in the Doppler division multiple access dimension in the two-dimensional matrix; and
perform a weighted average on the quantity of zero points in the sample dimension, the quantity of zero points in the chirp dimension, and the quantity of zero points in the Doppler division multiple access dimension, to obtain the total quantity of zero points.

20. The apparatus according to any one of claims 11 to 19, wherein the processing unit is further configured to: convert the second radar data into a frequency domain representation.

21. A computer device, comprising a processor, wherein the processor is coupled to a memory; and the processor is configured to execute instructions stored in the memory, to enable the computer device to perform the method according to any one of claims 1 to 10.

22. A computer-readable storage medium, wherein the computer-readable storage medium stores instructions, and when the instructions are executed by a processor, the method according to any one of claims 1 to 10 is implemented.

23. A computer program product, wherein the computer program product comprises computer program code, and when the computer program code is run on a computer, the method according to any one of claims 1 to 10 is implemented.

24. A terminal device, wherein the terminal device comprises the apparatus according to any one of claims 11 to 20.

FIG. 1

FIG. 2

A millimeter-wave radar obtains first radar data of a current frame — 301

↓

The millimeter-wave radar sets the first radar data to zero based on an interference filtering threshold of the current frame, to obtain second radar data — 302

↓

The millimeter-wave radar performs energy inversion based on the second radar data, to obtain a typical amplitude value of the current frame — 303

↓

The millimeter-wave radar determines a typical amplitude value of a next frame based on the typical amplitude value of the current frame and amplitude information of a historical frame — 304

↓

The millimeter-wave radar determines an interference filtering threshold of the next frame based on the typical amplitude value of the next frame and a preset detection threshold — 305

FIG. 3

EP 4 703 759 A1

ADC data AdcSampleData of an $n^{th}$ frame

401: Use an interference filtering threshold of the $n^{th}$ frame for interference suppression

AdcSampleData obtained after interference suppression

402: Perform frequency domain conversion

Signal processing of 1D-FFT/2D-FFT

403: Perform energy inversion

Inversion of a typical amplitude value of the $n^{th}$ frame

404: Perform prediction based on historical amplitude information

Interference filtering threshold of an $(n+1)^{th}$ frame

405: Set n to n+1 and transfer the interference filtering threshold of the $(n+1)^{th}$ frame

FIG. 4

501: Data
amount reduction

AdcSampleData
obtained through
interference suppression

AdcSampleData
obtained through
interference suppression

502: Zero point
counting

Zero point
distribution
characteristic

Zero point
distribution
characteristic

504: Weighted
average

Interference
suppression
reliability

Interference filtering
threshold of an
$(n+1)^{th}$ frame

503: Difference
calculation

Interference
threshold difference

Interference filtering
threshold of an $n^{th}$
frame

FIG. 5

FIG. 6

601: Data amount reduction

AdcSampleData obtained through interference suppression

AdcSampleData obtained through interference suppression

602: Zero point counting

Zero point distribution characteristic

Measured noise floor

Reference noise floor

603: Difference calculation

Noise floor difference

Interference filtering threshold of an $(n+1)^{th}$ frame

Interference filtering threshold of an $n^{th}$ frame

604: Difference calculation

Interference threshold difference

605: Weighted average

Interference suppression reliability

20

ADC data → **Interference zeroing and counting module** (71) → **1D-FFT module** (72) → **2D-FFT module** (73) → **Algorithm module** (74) → **Point cloud reporting module** (75)

Algorithm module (74) → **Interference threshold calculation and evaluation module** (76)

Interference filtering threshold of a next frame → Interference zeroing and counting module (71)

FIG. 7

Transfer an interference threshold — 801

↓

Perform interference detection zeroing — 802

↓

Perform interference weighting counting — 803

**FIG. 8**

Perform amplitude inversion — 901

↓

Perform amplitude prediction — 902

↓

Perform interference threshold calculation — 903

↓

Perform interference suppression evaluation — 904

**FIG. 9**

Apparatus — 100

Processing unit — 1001

**FIG. 10**

110

1102

Communication
interface

1101

Processor

1104

1103

Storage system

FIG. 11

## INTERNATIONAL SEARCH REPORT

| International application No. |
| --- |
| **PCT/CN2023/091154** |

**A. CLASSIFICATION OF SUBJECT MATTER**

G01S 7/292(2006.01)i

According to International Patent Classification (IPC) or to both national classification and IPC

**B. FIELDS SEARCHED**

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNTXT, CNABS, CNKI, ENTXT: 雷达, 检测, 干扰, 过滤, 门限, 阈值, 幅度, 噪声, 能量, 反演, radar, amplitude, threshold, noise, interference, detection

**C. DOCUMENTS CONSIDERED TO BE RELEVANT**

| Category* | Citation of document, with indication, where appropriate, of the relevant passages | Relevant to claim No. |
| --- | --- | --- |
| A | CN 115980674 A (FUSI (HANGZHOU) INTELLIGENT TECHNOLOGY CO., LTD.) 18 April 2023 (2023-04-18)<br>    description, paragraphs 66-72 | 1-24 |
| A | CN 114415123 A (BEIJING HAILANXIN DATA SCIENCE AND TECHNOLOGY CO., LTD.) 29 April 2022 (2022-04-29)<br>    entire document | 1-24 |
| A | CN 111371436 A (PLA AIR FORCE EARLY WARNING ACADEMY) 03 July 2020 (2020-07-03)<br>    entire document | 1-24 |
| A | CN 110221286 A (ANHUI SUN-CREATE ELECTRONICS CO., LTD.) 10 September 2019 (2019-09-10)<br>    entire document | 1-24 |
| A | KR 20220066796 A (SAMSUNG ELECTRONICS CO., LTD.) 24 May 2022 (2022-05-24)<br>    entire document | 1-24 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 January 2024** | **20 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/091154**

| Patent document cited in search report | | | Publication date (day/month/year) | Patent family member(s) | Publication date (day/month/year) |
|---|---|---|---|---|---|
| CN | 115980674 | A | 18 April 2023 | None | |
| CN | 114415123 | A | 29 April 2022 | None | |
| CN | 111371436 | A | 03 July 2020 | None | |
| CN | 110221286 | A | 10 September 2019 | None | |
| KR | 20220066796 | A | 24 May 2022 | None | |

Form PCT/ISA/210 (patent family annex) (July 2022)